# EUROPÄISCHE PATENTSCHRIFT

(11) **EP 0 584 512 B1**
(45) Veröffentlichungstag und Bekanntmachung des Hinweises auf die Patenterteilung: **18.06.1997**
(21) Anmeldenummer: 93111302.1
(22) Anmeldetag: 14.07.1993
(51) Int. Cl.: G06F 11/00, G06F 9/445, G06F 11/34

(54) **Verfahren zum zeitlichen Überwachen einer Programmabarbeitung**
Method for time-monitoring program execution
Méthode pour la surveillance temporelle de l'exécution d'un programme

(30) Priorität: 21.08.1992 DE 4227808
(43) Veröffentlichungstag der Anmeldung: 02.03.1994
(73) Patentinhaber: SIEMENS AKTIENGESELLSCHAFT, 80333 München (DE)
(72) Erfinder: Leimkötter, Ulrich, Dipl.-Ing., D-45888 Gelsenkirchen (DE); Dziennus, Norbert, Dipl.-Ing., D-44227 Dortmund (DE); Böttger, Detlev, Dipl.-Ing., D-58239 Schwerte (DE)

(56) Entgegenhaltungen:
- FR-A- 2 309 915
- IBM TECHNICAL DISCLOSURE BULLETIN, Bd. 22, Nr. 10 , März 1980 , NEW YORK, US, Seiten 4654 - 4656 H.J. KNEPP, JR.: 'Real-time integrated extraordinary event threshold detector'
- PATENT ABSTRACTS OF JAPAN vol. 011, no. 375 (P-644)(2822) 8. Dezember 1987 & JP-A-62 145 336 (MITSUBISHI ELECTRIC CORP) 29. Juni 1987

## Beschreibung

Die Erfindung betrifft ein Verfahren zum zeitlichen Überwachen einer von einer Prozessoreinrichtung ausgeführten Programmabarbeitung nach dem Oberbegriff des Patentanspruchs 1.

Ein Überwachungsverfahren dieser Art dient allgemein zum Selbsttest einer programmgesteuerten Einrichtung, in der eine Prozessoreinrichtung Programmsequenzen in zyklischer Wiederholung abarbeitet. Da sich in der Regel eine maximale Zeitdauer ermitteln läßt, in der bei ordnungsgemäßer Programmabarbeitung wenigstens eine Wiederholung auftritt, kann ein Überschreiten dieser Zeitdauer als Indiz gewertet werden, daß eine Funktionsstörung bei der Abarbeitung der Programmsequenzen aufgetreten sein muß.

Solche Funktionsstörungen können z.B. durch Fehler bei Speicherzugriffen entstehen, die zu falschen Programmadressen und damit zu einer fehlerhaften Programmabarbeitung durch die Prozessoreinrichtung führen; dies wird in Fachkreisen häufig auch als "Verirren des Prozessors" bezeichnet wird. Eine fehlerhafte Programmabarbeitung kann also auch auf äußere Einflüsse, z.B. einer elektrostatischen Entladung zurückzuführen sein. Prinzipiell ist eine Überwachung der Programmabarbeitung auch in einer grammerstellungsphase von erheblicher Bedeutung.

Das Überwachungsverfahren sieht eine Zeitgliedeinrichtung vor, z.B. einen 'Hardware-Timer', die durch Reinitialisierungsanweisungen auf die maximale Zeitdauer, die zwischen zwei zyklischen Wiederholungen verstreichen kann, eingestellt wird. Die Reinitialisierungsanweisungen werden dazu an einer Stelle im Programm hinterlegt sein, die mit Sicherheit innerhalb dieser maximalen Zeitdauer wenigstens zweimal abgearbeitet wird. Läuft das Zeitvolumen der Zeitgliedeinrichtung, also die eingestellte Zeitdauer ab, weil keine Reinitialisierungsanweisung dies verhindert hat, wird von der Zeitgliedeinrichtung eine fehlerhafte Programmabarbeitung erkannt und gemeldet.

Eine schnelle Erkennung einer fehlerhaften Prgrammarbeitung ist wichtig, um bereits unmittelbar nach auftretender Störung sofort entsprechende Maßnahmen, z.B. einen Neustart der prozessorgesteuerten Einrichtung, einleiten zu können, da eine bei fehlerhafter Programmabarbeitung mögliche Datenzerstörung keinen größeren Umfang einnehmen soll und einem Benutzer der prozessorgesteuerten Einrichtung bei einer aufgetretenen Störung die Funktionen der prozessorgesteuerten Einrichtung sobald wie möglich wieder in vollem Umfang zur Verfügung stehen sollen.

Insbesondere die schnelle Fehlererkennungsfähigkeit und der äußerst geringe Zeitaufwand, den die Prozessoreinrichtung zur Ausführung des Überwachungsverfahrens benötigt, macht das bekannte Verfahren auch zur Überwachung von echtzeitbezogenen Programmabläufen interessant.

Schwierigkeiten ergeben sich jedoch bei der Implementierung des bekannten Verfahrens in komplexeren programmgesteuerten Einrichtungen, z.B. in Telefonnebenstellenanlagen, in denen eine multiprozessuale Programmstruktur mit Hilfe eines sogenannten Multitasking-Betriebssystems realisiert ist.

Aufgrund einer prioritätengesteuerten Zuteilung der Prozessoreinrichtung zu einer Mehrzahl von aufgabenspezifisch erstellten Programmodulen mit unterschiedlicher Priorität ergibt sich die Frage nach dem Hinterlegungsort für die Reinitialisierungsanweisungen, d. h. welches der Programmodule sich zur Hinterlegung der Reinitialisierungsanweisungen eignet.

Bei einer Hinterlegung in einem hochprioren Programmodul kann eine fehlerhafte Programmabarbeitung in den Programmdulen mit geringerer Priorität nicht erkannt werden, weil das Multitasking-Betriebssystem die Abarbeitung eines niederprioren Programmoduls stets unterbricht, sobald ein höherpriores zur Abarbeitung ansteht und deshalb die Zeitgliedeinrichtung durch die im hochprioren Programmodul befindlichen Reinitialisierungsanweisungen rückgesetzt wird, obwohl in einem niederprioren Programmodul eine fehlerhafte Programmabarbeitung aufgetreten ist und diese bei Wiederaufnahme der Abarbeitung des betreffenden niederprioren Programmoduls jeweils wieder fortgesetzt wird.

Die Reinitialisierungsanweisungen im Programmodul mit der niedrigsten Priorität zu hinterlegen, hat zur Folge, daß die Zeitgliedeinrichtung auf ein großes Zeitvolumen eingestellt werden muß, da insbesondere bei hoher Leistungsanforderung an die prozessorgesteuerte Einrichtung das niedrigstpriore Programmodul nur relativ selten bearbeitet wird. Mit einer langen Überwachungsdauer, d. h. also mit einem großen Zeitvolumen für die Zeitgliedeinrichtung ist jedoch prinzipiell eine schnelle Fehlererkennung nicht möglich.

Aufgabe der vorliegenden Erfindung ist es, ausgehend von den Prinzipien des bekannten Überwachungsverfahrens gemäß dem Oberbegriff des Patentanspruchs 1 ein weitergebildetes Verfahren anzugeben, das eine Überwachung einer von einem prioritätsgesteuerten Multitasking-Betriebssystem koordinierte Programmabarbeitung ermöglicht.

Gelöst wird diese Aufgabe erfindungsgemäß durch die Merkmale des kennzeichnenden Teils der Patentansprüche 1 und 3.

Bei dem erfindungsgemäßen Verfahren ist zwischen einem hochprioren und einem niederprioren Programmodul eine gegenseitige Abhängigkeit vorgesehen, die als eine Art zahnung wirkt und nicht nur eine Überwachung der Programmabarbeitung des hochprioren und des niederprioren Programmoduls, sondern auch - aufgrund der prioritätsabhängigen Zuteilung der Programmodule - eine Überwachung aller Programmodule ermöglicht, deren Prioritätswert zwischen dem des hochprioren und des niederprioren Programmoduls liegt.

Durch die Implementierung von zwei Überwachungsvariablen, einem Zählwert, auf den nur das hochpriore Programmodul schreibend zugreifen kann und einem Richtungswert, auf dem nur das niederpriore Programmodul schreibend zugreifen kann, wird die Fehlererkennungssicherheit des Überwachungsverfahrens erheblich erhöht, da ein fehlerhafter Programmablauf in der Regel nur innerhalb eines einzigen Programmoduls auftritt und eine gleichzeitige Verfälschung beider Überwachungsvariablen, die zu einer Nichterkennung eines fehlerhaften Programmablaufs führen kann, nicht möglich ist.

Vorteilhafte Weiterbildungen der Erfindung sind in den Unteransprüchen angegeben.

Wird als hochpriores Programmodul das höchstpriore und als niederpriores Programmodul das niedrigstpriore Programmodul gewählt, lassen sich sämtliche Programmodule in einem Verfahrensablauf überwachen.

Um eine differenziertere Form der Überwachung zu realisieren, kann mehreren Paaren von hoch- und niederprioren Programmodulen je eine Zeitgliedeinrichtung, ein Zählerspeicher und ein Richtwertspeicher zugeordnet werden. Damit kann die Fehlererkennungsgeschwindigkeit erhöht werden und es läßt sich ein von einer fehlerhaften Programmabarbeitung betroffenes Programmodul einfach identifizieren. Die Wirkung einer Fehlermeldung kann dann insbesondere darauf gerichtet werden, lediglich einen Neustart des von einer Störung betroffenen Programmoduls zu veranlassen.

Ein Ausführungsbeispiel der Erfindung wird im folgenden anhand der Zeichnung näher erläutert. Dabei zeigen
- Figur 1: ein Blockschaltbild mit Komponenten in einer zentralen Steuerung z.B. für eine Telefonnebenstellenanlage,
- Figur 2: eine schematische Darstellung zur Veranschaulichung der Prioritätsstruktur der Programmodule,
- Figur 3: eine schematische Darstellung zur Veranschaulichung der Zuweisung von Programmodulen,
- Figur 4: ein Ablaufdiagramm zur Veranschaulichung der für das Überwachungsverfahren wesentlichen programmtechnischen Schritte im hochprioren Programmodul, und
- Figur 5: ein Ablaufdiagramm zur Veranschaulichung der für das Überwachungsverfahren wesentlichen programmtechnischen Schritte im niederprioren Programmodul.

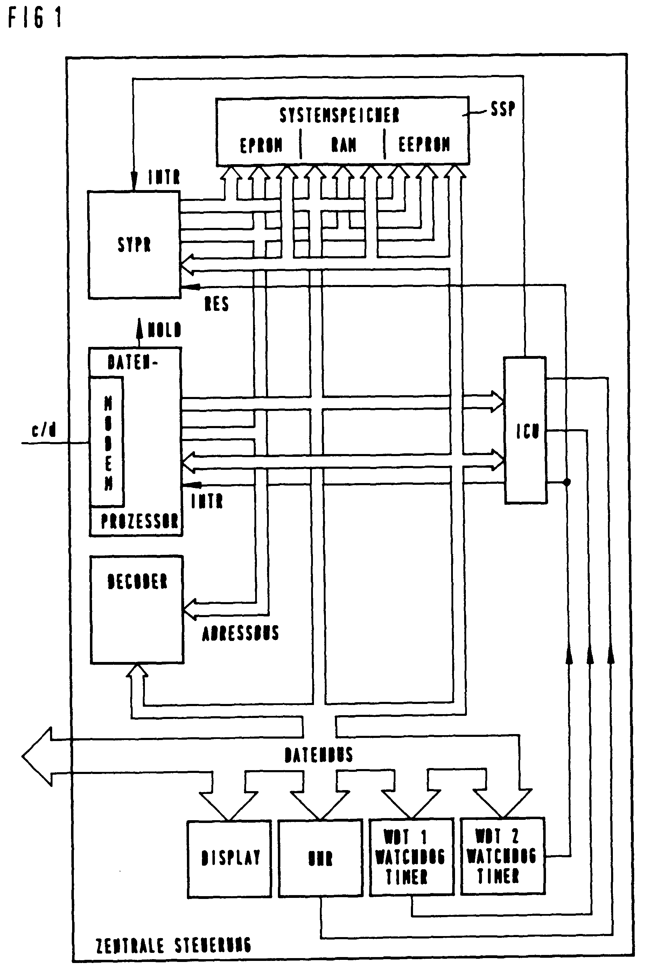

In Figur 1 sind anhand eines Blockschaltbildes die zur zentralen Steuerung in einer prozessorgesteuerten Einrichtung - z. B. einer Telefonnebenstellenanlage - gehörenden Komponenten dargestellt. Eine Prozessoreinrichtung SYPR, z. B. ein Microprozessor vom Typ SAB 8OXXX, ist über einen Adreßbus, einen Datenbus und einen Steuerbus mit einem Systemspeicher SSP verbunden. Dieser Systemspeicher SSP besteht aus Halbleiterspeicherbausteinen unteschiedlichen Speichertyps; einem EPROM-Speicher, in dem das gesamte Systemprogramm unabänderlich hinterlegt ist; einem RAM-Speicher, der als Schreib-Lese-Arbeitsspeicher dient und einem EEPROM-Speicher, in dem Daten hinterlegt sind, die bei Spannungsausfall nicht verloren gehen.

Ebenfalls auf den Systemspeicher SSP zugreifen kann ein Datenprozessor, der im wesentlichen die Funktionen eines Modems ausführt. Weiterhin enthält die zentrale Steuerung eine Decodereinrichtung zum Auswählen von einzelnen Adressen aus dem Adreßbereich sowie mehrere Überwachungseinhei-ten, wie z. B. ein Display, eine Uhr und Zeitgliedeinrichtungen WDT1, WDT2, sogenannte "Watchdog-Timer". Die beiden "Watchdog-Timer" WDT1, WDT2 sind z.B. mit einem Binärzähler realisiert, die einen Reseteingang und wenigstens zwei Zählerausgänge aufweist. Das Zeitvolumen für den einen Timer WDT2 kann z.B. doppelt so groß sein wie das des anderen Timers WDT1. Die "Watchdog-Timer" sind so geschaltet, daß dann wenn der Timer WDT1 abläuft dieser einen nichtmaskierbaren Interrupt auslöst. Zeitlich verzögert kann dann der Timer WDT2 ablaufen, der mit der Resetleitung RES der Prozessoreinrichtung SYPR verbunden ist und einen Neustart auslöst. Beide Timer werden zentral durch die Ausführung einer Reinitialisierungsanweisung zurückgesetzt.

Eine Interrupt-Steuereinheit ICU sammelt Interrupt-Anforderungen, die von den Überwachungseinheiten zugeführt werden und gibt Interrupts INTR an die Prozessoreinrichtung SYPR und den Datenprozessor weiter. Über den Datenbus ist die zentrale Steuerung mit vermittlungstechnik-spezifischen Einheiten der Telefonnebenstellenanlage verbunden.

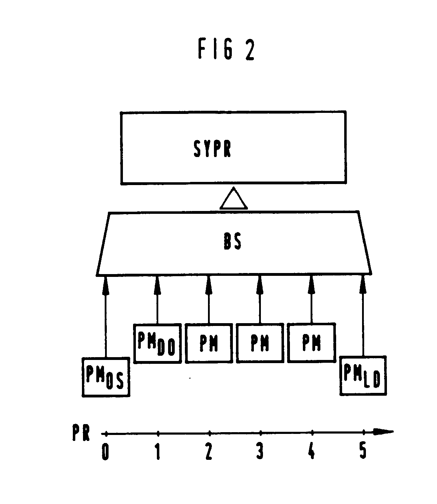

In Figur 2 sind in vereinfachender schematischer Darstellung das Multitasking-Betriebssystem BS und die im Systemspeicher SSP vorhandenen Programmodule PM ihrer zugeordneten Priorität PR nach symbolisch dargestellt. Das Multitasking Betriebssystem BS teilt zu jedem Zeitpunkt dem Systemprozessor SYPR eines der Programmodule PM zur Abarbeitung zu. Wie bereits erwähnt, ist jedem Programmodul PM ein Prioritätswert PR eindeutig zugeordnet. In einer fonnebenstellenanlage beinhaltet z.B. das Programmodul PM_{OS} mit der höchsten Priorität PRO Programmsequenzen, die zur Verwaltung der Betriebsmittel verantwortlich sind. Zum Programmodul PM_{DO} mit der nächstfolgenden Priorität PR1 zählen Programmsequenzen, die zur Bearbeitung und Beantwortung von Amtsanreizen dienen. Das Programmodul PM mit dem Prioritätswert PR2 weist Programmsequenzen für die Sicherung von Teilnehmeranreizen auf; die Programmodule PM mit den darauffolgenden Prioritäten PR3,...,PR5 sind für die Vermittlungstechnik, die Betriebstechnik und einen zyklischen Routinetest verantwortlich.

Da das Multitasking-Betriebssystem BS eine Bearbeitung der Programmodule PM nach Echtzeitkriterien steuert, d.h. daß z. B. alle 10 ms eingetroffene Anreize abgefragt werden, ist die Programmabarbeitung einem gewissen Zyklus unterworfen, so daß bestimmte Programmsequenzen, insbesondere grammsequenzen in dem Programmodul PM_{OS} mit der höchsten Priorität PRO in zyklischer Wiederholung nach einer gewissen maximalen Zeitdauer abgearbeitet werden. Zur Durchführung des erfindungsgemäßen Verfahrens ist in einem hochprioren Programmodul - im Ausführungsbeispiel soll dies das höchstpriore Programmodul PM_{OS} sein - eine Reinitialisierungsanweisung hinterlegt, die die beiden "Watchdog-Timer" WDT1, WDT2 mit jeweils einem Zeitvolumen lädt. Die "Watchdog-Timer" WDT1, WDT2 sind echtzeitgekoppelt und verringern das geladene Zeitvolumen. Bei Ablauf des Zeitvolumens löst der "Watchdog-Timer" WDT1 eine Interrupt-Anforderung an die Interrupt-Steuereinheit ICU aus.

Der Interrupt aktiviert eine" Recoveryroutine" mit Hilfe der untersucht wird, ob ein sinnvolles Weiterlaufen des Systems möglich ist oder nicht. ist ein Weiterlaufen des Systems nicht möglich, so wird in der Recoveryroutine auf das Auslösen eines Neustarts durch den Watchdog-Timer WDT2 gewartet.
Gemäß der Erfindung werden die Reinitialisierungsanweisungen jedoch nur dann an den "Watchdog-Timer" WDT1 ausgegeben, wenn ein unter Verantwortung eines hochprioren Programmoduls PM_{OS} befindlicher Zählerwert ZW weder seinen minimal möglichen noch seinen maximal möglichen Endwert erreicht hat. Der Zählerwert ZW ist in einem Zählerspeicher ZWS innerhalb des RAM-Speichers hinterlegt und kann von dem hochprioren Programmodul PM_{OS} mit lesenden und schreibenden Zugriffen erreicht werden.

Der Zählerspeicher ZWS kann auch von einem niederprioren Programmodul - im Ausführungsbeispiel soll dies jetzt das Programmodul PM_{LD} mit der niedrigsten Priorität PR5 sein - mit lesenden Zugriffen erreicht werden. Zur Ausführung des erfindungsgemäßen Verfahrens wird bei Abarbeitung des hochprioren Programmoduls PM_{OS} der Zählerwert ZW in Abhängigkeit davon, ob ein ebenfalls im RAM-Speicher hinterlegter Richtungswert RW einen binären "0"- oder "1"-Wert aufweist, dekrementiert bzw. inkrementiert.

Der Richtungswert RW ist in einem Richtwertspeicher RWS innerhalb des RAM-Speichers hinterlegt. Von dem hochprioren Programmodul PM_{OS} wird auf diesen Richtungswert RW nur lesend zugegriffen, von dem niederprioren Programmodul PR_{LD} wird auf den Richtungswert RW nur schreibend zugegriffen.

Der Richtungswert RW wird von dem niederprioren Programmodul PR_{LD} in Abhängigkeit vom momentanen Zählerwert ZW auf einen "1"- oder "O"-Wert gesetzt, je nachdem, ob der im Zählerspeicher ZWS hinterlegte Zählerwert ZW kleiner oder größer als der in der Mitte zwischen den im Zählerspeicher ZWS hinterlegbaren Zählerendwerten liegende Mittelwert ist.

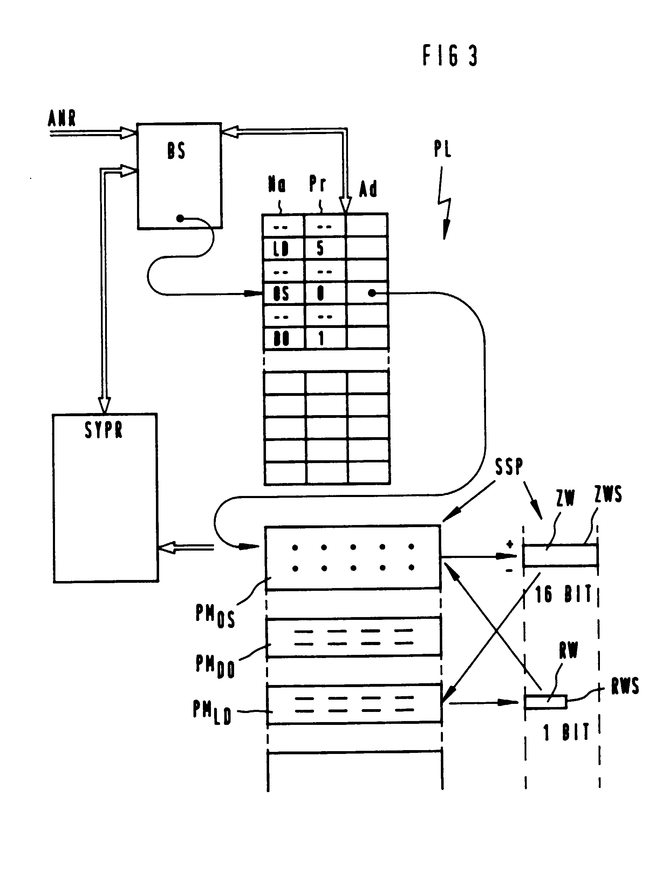

Um ein besseres Verständnis zu vermitteln, wie die Korrespondenz des niederprioren Programmoduls mit dem hochprioren Programmodul und insbesondere die Abhängigkeit des Richtungswertes vom Zählerwert und die des Zählerwertes vom Richtungswert eine Überwachung der Programmabarbeitung in allen Programmodulen ermöglicht, wird die prinzipielle Arbeitsweise eines Multitasking-Betriebssystems anhand der Figur 3 noch einmal kurz erläutert.

Figur 3 zeigt anhand schematischer Funktionsblöcke das Zusammenwirken von Programmodulen PM in einem Multitasking-Betriebssystem BS mit einer Prozessoreinrichtung SYPR.

Vom Prinzip her gesehen dient die Prozessoreinrichtung SYPR ausschließlich zur Bearbeitung des als Betriebssystem BS bezeichneten Programmes. Dieses Betriebssystem-Programm ist jedoch so ausgelegt, daß es in Abhängigkeit von eintreffenden Informationen, die als Anreize ANR bezeichnet werden, als auch durch interne Zustände bedingt, nacheinander jeweils einen der ihm zur Verfügung stehenden Programmodule PM auswählt und für eine gewisse Zeitdauer der Prozessoreinrichtung SYPR zur Ausführung zuteilt. Jedes Programmodul PM ist als Programmcodesequenz im Systemspeicher SSP hinterlegt und hat einen Namen NA sowie einen Prioritätswert PR.

Dem Betriebssystem BS steht eine Prozessliste PL zur Verfügung, in der es die ablaufbereiten Programmodule PM, z. B. durch Eintragung des Namens NA, des Prioritätswertes PR und einer Adresse AD des Programmoduls PM im Systemspeicher SSP vermerkt und aus der dann jeweils das Programmodul PM mit der höchsten Priorität für eine Zuweisung an die Prozessoreinrichtung SYPR ermittelt wird.

Wird ein Programmodul PM der Prozessoreinrichtung SYPR zugeteilt, kann das betreffende Programmodul PM die soreinrichtung SYPR so lange behalten, d.h. es wird so lange abgearbeitet, bis sich entweder ein höherpriorisiertes Programmodul um Zuteilung der Prozessoreinrichtung SYPR bewirbt, oder bis das momentan abgearbeitete Programmodul von sich aus die Prozessoreinrichtung SYPR abgibt. Letzteres trifft vor allem auch dann zu, wenn ein Programmodul PM zur Bearbeitung seiner Aufgaben gewisse, von anderen Programmodulen zu erbringende Informationen benötigt, und auf das Eintreffen dieser Informationen warten muß.

Jedes unter Verwaltung eines Multitasking-Betriebssystems BS befindliche Programmodul PM ist zu einem beliebigen Zeitpunkt genau in einem von im wesentlichen drei Zuständen, die als laufend, ablaufbereit und schlafend bezeichnet werden. Laufend ist demnach dasjenige Programmodul, dem im Moment die Prozessoreinrichtung SYPR zugeteilt ist. Ablaufbereit sind die Programmodule, die sich um Zuteilung der Prozessoreinrichtung bewerben, d.h. in der Prozeßliste PL, vermerkt sind, und als schlafend werden diejenigen Programmodule bezeichnet, die auf das Eintreffen bestimmter Anreize oder Meldungen warten. Anreize, auch Interrupts genannt, können von Hardwareeinrichtungen, z. B. über die Interrupt-Steuereinrichtung ICU eintreffen oder bei Abarbeitung eines Programmodules von diesem ausgelöst werden.

Aus der Prozessliste PL werden schlafende Programmodule, z.B. wenn die für die Durchführung einer betreffenden Aufgabe erforderliche Abarbeitung eines Programmodules gänzlich abgeschlossen ist, gelöscht.

Auf welche Weise eine fehlerhafte Programmabarbeitung mittels des erfindungsgemäßen Überwachungsverfahrens erkannt wird, läßt sich anhand von Fallbeispielen untersuchen. Ein einfaches, aber häufig auftretendes Fehlerbild bei einer fehlerhaften Programmabarbeitung stellt eine von der Prozessoreinrichtung aufgrund von Störungen eingenommenen Endlosschleife dar, wobei natürlich eine solche Endlosschleife nur innerhalb eines jeweiligen Programmoduls bzw. innerhalb des Betriebssystemprogrammes auftritt.

Entsteht demnach eine fehlerhafte Programmabarbeitung, während das höchstpriore Programmodul PM_{OS} von der Prozessoreinrichtung SYPR abgearbeitet wird, ist anzunehmen, daß das höchstpriore Programmodul PM_{OS} in eine Endlosschleife gerät und keinen schlafenden Zustand mehr einnimmt. Das bedeutet, daß sämtliche Programmodule PM mit niedriger Priorität PR1,...,PR5 blockiert sind, also nicht mehr der Prozessoreinrichtung SYPR zugeteilt werden. Ein Verdrängen des höchstprioren Programmodules PM_{OS} durch andere ablaufbereite Programmodule ist aufgrund der Prioritätssteuerung nicht möglich.

Eine Endlosschleife bei der Abarbeitung des höchstprioren Programmodules PM_{OS} führt dazu, daß der Zählerwert ZW im Zählerspeicher ZWS je nach Einstellung des Richtungswertes RW ausschließlich inkrementiert bzw. dekrementiert wird. Da niederpriore Programmodule blockiert sind, ist es nicht möglich, daß der Richtungswert RW umgeschaltet wird (dies ist nur bei Abarbeitung des niedrigstprioren Programmodules PM_{LD} möglich). Durch sukzessives Inkrementieren bzw. Dekrementieren des Zählerwertes ZW bei fehlerhafter Abarbeitung des höchstprioren Programmodules PM_{OS} wird der Zählerwert ZW umgehend einen seiner Endwerte erreicht haben, was dann unverzüglich dazu führt, daß keine weiteren Reinitialisierungsanweisung an die "Watchdog-Timer" WDT1, WDT2 ausgegeben wird. Die Folge ist, daß der "Watchdog-Timer" WDT1 nach Ablauf seines Zeitvolumens einen Interrupt auslöst, der sofern keine Behebung des Fehlers möglich ist, ausgelöst durch den "Watchdog-Timer" WDT2 zum Neustart der gesamten Anlage führt.

Tritt eine fehlerhafte Programmabarbeitung auf, während das niedrigstpriore Programmodul PM_{LD} abgearbeitet wird, ist mit großer Wahrscheinlichkeit davon auszugehen, daß nicht die Programmsequenz von der Endlosschleife betroffen ist, die den Richtungswert RW einstellt, so daß der Richtungswert RW unverändert bleibt, obwohl der Zählerwert ZW ein Umschalten des Richtungswertes RW erforderlich machen würde.

Das niedrigstpriore Programmodul PM_{LD} kann, wie bereits erläutert, jederzeit von allen höherprioren Programmodulen unterbrochen werden und bei Wiederaufnahme der Abarbeitung des niedrigsprioren Programmodules PM_{LD} wird die fehlerhafte Abarbeitung stets wieder fortgesetzt. Da im höchstprioren Programmodul PM_{OS} der Zählerwert ZW nur in einer Richtung verändert wird, ist einer der Endwerte des Zählerspeichers schnell erreicht und eine Reinitialisierung der "Watchdog-Timer" WDT1, WDT2 unterbleibt.

Tritt eine fehlerhafte Programmabarbeitung bei einem Programmodul auf, dessen Prioritätswert zwischen dem höchsten und dem niedrigsten Prioritätswert PR0, PR5 liegt, so wird die Abarbeitung von Programmodulen mit gegenüber dem betreffenden Programmodul niedrigerer Priorität blockiert.

Das bedeutet, daß der Richtungswert RW nicht an den Zählerwert angepaßt werden kann und damit unverändert bleibt. Ein Erreichen des Zählerendwertes und eine unterbleibende Initialisierung ist die Folge.

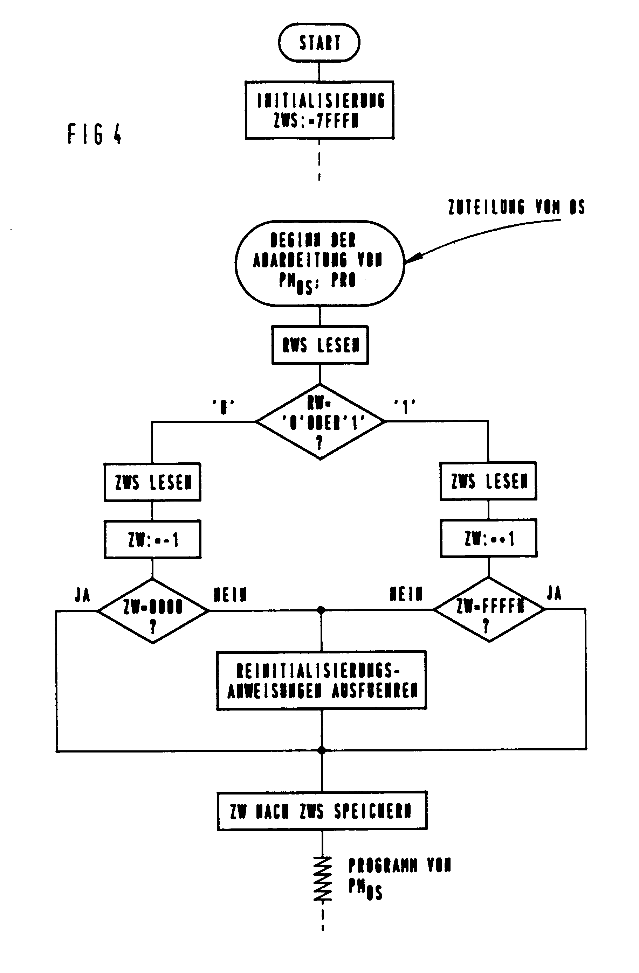

In Figur 4 ist ein Ablaufdiagramm mit den zu Implementierung des erfindungsgemäßen Verfahrens relevanten programmtechnischen Schritten innerhalb eines hochprioren grammodules, z.B. des höchstprioren Programmodules PM_{OS} dargestellt.

Zur Implementierung eines Überwachungsverfahrens gemäß der Erfindung wird beim Einschalten der prozessorgesteuerten Einrichtung der im Zählerspeicher ZWS hinterlegte Zählerwert ZW auf einen Mittelwert voreingestellt, der im Falle eines 16 Bit breiten Zählerspeichers einem hexadezimalen Wert von 7FFFH, in dezimaler Schreibweise einem Wert von 32.767 entspricht.

Innerhalb des Programmodules PM_{OS} mit der höchsten Priorität PR0 wird zu Beginn, d.h. an der Stelle, die unmittelbar nach Zuteilung an die Prozessoreinrichtung SYPR abgearbeitet wird, eine Programmsequenz hinterlegt, die zunächst veranlaßt, daß der im Richtungswertspeicher RWS hinterlegte Richtungswert RW gelesen wird und dann ermittelt wird, ob dieser Richtungswert RW den binären Wert "0" oder "1" aufweist. Im Falle des binären Wertes "0" wird anschließend der im Zählerwertspeicher ZWS hinterlegte Zählerwert ZW gelesen, um eine Einheit verringert und der neue Zählerwert mit dem Endwert OOOOH verglichen. Für den Fall, daß der Zählerwert ZW dem Endwert entspricht, wird nach Abspeicherung des Zählerwertes ZW im Zählerspeicher ZWS sofort die Abarbeitung des Programmoduls PM_{OS} fortgesetzt.

Wurde beim Auslesen des Richtungswertspeichers RWS eine binäre "1" als Richtungswert RW erkannt, wird ebenfalls der Zählerspeicher ZWS ausgelesen im Gegensatz zum vorherigen Fall wird der Zählerwert ZW jedoch um eine Einheit erhöht, d. h. inkrementiert. Ein Vergleich des inkrementierten Zählerwertes erfolgt anschließend mit dem maximalen Endwert FFFFH. Ist der Zählerwert gleich diesem maximalen Endwert, dann wird nach Abspeicherung des Zählerwertes ZW die Abarbeitung des Programmoduls PM_{OS} ebenfalls sofort fortgesetzt. In den Fällen, in denen bei den Vergleichen des dekrementierten bzw. inkrementierten Zählerwertes mit dem minimalen Endwert bzw. dem maximalen Endwert ermittelt wurde, daß der Zählerwert ZW dem betreffenden Endwert nicht entspricht, wird eine Reinitialisierungsanweisung ausgeführt, die z. B. in Form eines in den "Watchdog-Timer" WDT1 geschriebenen Datenwortes geschieht. Dieses Datenwort stellt das Zeitvolumen des "Watchdog-Timer" WD1 ein.

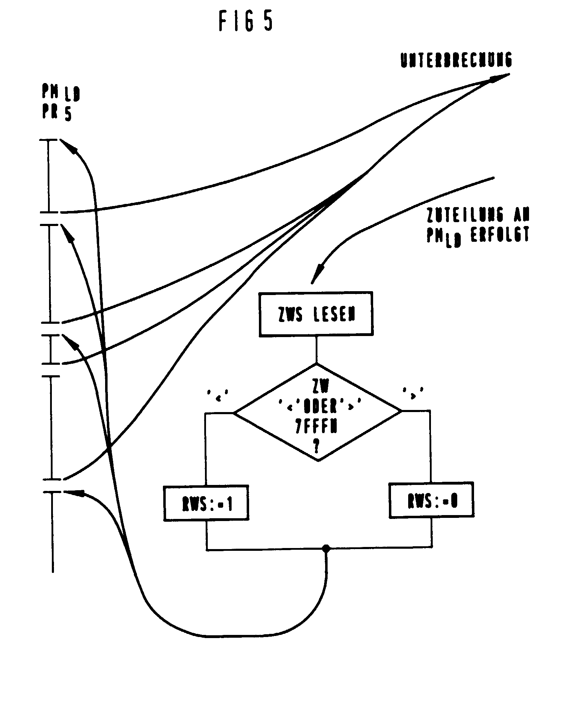

In Figur 5 ist ein Ablaufdiagramm zur Veranschaulichung der für die Ausführung des Prüfprogrammes wesentlichen programmtechnischen Schritte im niedrigstprioren Programmodul PM_{LD} dargestellt. Da dieses Programmodul aufgrund seiner geringen Priorität häufig unterbrochen wird und nicht an einem Stück, so wie das Programmodul der höchsten Priorität, abgearbeitet wird, wurde in der Figur eine symbolische Darstellung gewählt, die diesen Sachverhalt zum Ausdruck bringen soll und eine zur Implementierung des Überwachungsverfahrens dienende Programmsequenz jedesmal bei Zuteilung, d. h. also auch jedesmal nach einer vorausgegangenen Unterbrechung der Abarbeitung, ausgeführt wird.

Zunächst veranlaßt diese Programmsequenz, daß aus dem Zählerspeicher ZWS der Zählerwert ZW gelesen wird. Anschließend wird der gelesene Zählerwert ZW mit dem Mittelwert, der bei Initialisierung in den Zählerspeicher gespeichert wurde, also im vorliegenden Beispiel 7FFFH, verglichen. Ist der Zählerwert ZW geringer als der Mittelwert, dann wird in den Richtungswertspeicher RWS eine binäre "1" eingetragen. Ist der Zählerwert ZW größer als der Mittelwert, wird im Richtungswertspeicher RWS eine binäre "0" hinterlegt. Nach dem Einschreiben einer "1" oder einer "0" wird dann das unterbrochene Programmodul PM_{LD} in seiner Abarbeitung fortgesetzt. Die kurze Programmsequenz, in der der Zählerwert ZW gelesen, verglichen und der Richtungswert RW gespeichert wird, darf nicht unterbrechbar sein, wozu im Betriebssystem geeignete Maßnahmen zur Verfügung stehen.

Die Dimensionierung des Zeitvolumen des "Watchdog-Timer" WDT1 richtet sich im wesentlichen nach der kleinsten Zykluszeit innerhalb des Betriebssystems, so daß sichergestellt ist, daß der "Watchdog-Timer" bei ordnungsgemäßem Programmablauf reinitialisiert werden kann. Bei einer kleinsten Zykluszeit von 10 ms, die in der Regel auch dem Systemtakt entspricht, ist es z. B. angemessen, das Zeitvolumen des "Watchdog-Timer" WDT1 auf 64 ms und das des "Watchdog-Timers" WDT2 auf 128 ms einzustellen.

Gegenüber einer relativ einfachen Implementierung des Überwachungsverfahrens wie im Ausführungsbeispiel dargelegt, ist es ohne erheblichen Aufwand möglich, erfindungsgemäße Überwachungsverfahren quasi gleichzeitig für mehrere Paare von hoch- und niederprioren Programmodulen vorzusehen. So läßt sich z.B. für das Programmodul mit der Priorität "0" und für das Programmodul mit der Priorität "1" ein erstes Überwachungsverfahren und für die Programmodule mit der Priorität "2" und "5" ein zweites Überwachungsverfahren implementieren. Beiden Überwachungsverfahren ist dabei jeweils ein individueller Zählerspeicher, Richtungswertspeicher RWS als auch "Watchdog-Timer" WDT1, WDT2 zugeordnet. Mit einer Implementierung mehrerer unabhängiger Überwachungsverfahren lassen sich die Programmodule differenzierter überwachen und Fehler schneller erkennen.

## Patentansprüche

1. Verfahren zum zeitlichen Überwachen einer von einer Prozessoreinrichtung (SYPR) in zyklischer Wiederholung ausgeführten Programmabarbeitung mit im Programm angeordneten Reinitialisierungsanweisungen für wenigstens eine Zeitgliedeinrichtung (WDT), von der bei Ablauf ihres Zeitvolumens eine Fehlermeldung erzeugt wird,
**dadurch gekennzeichnet,**
daß bei einer Programmabarbeitung, bei der Programmodule (PM) von einem Multitasking-Betriebssystem (BS) in Abhängigkeit von programmodulindividuell zugeordneten tätsstufen (PR) der Prozessoreinrichtung (SYPR) zur Abarbeitung zugewiesen werden, daß mit Zuweisung eines hochprioren Programmoduls (PM_{OS}) jeweils ein in einem Zählerspeicher (ZWS) hinterlegter Zählerwert (ZW) in Abhängigkeit von einem in einem Richtungswertspeicher (RWS) gespeicherten Richtungswert (RW) erhöht bzw. verringert wird und nur bei Nichterreichen eines vorgebbaren oberen bzw. unteren Zählerendwertes eine Reinitialisierungsanweisung ausgeführt wird,
daß mit Zuweisung eines niederprioren Programmoduls (PM_{LD}) jeweils der Zählerwert (ZW) ausgelesen und ermittelt wird, welchem der beiden Zählerendwerte der Zählerwert (ZW) näherliegt und
daß dabei der Richtungswert (RW) so eingestellt wird, daß bei einer nachfolgenden Zuweisung des hochprioren Programmoduls (PM_{OS}) eine Abstandsvergrößerung des Zählerwertes (ZW) zum als näherliegend ermittelten Zählerendwert bewirkt wird.

2. Verfahren nach Anspruch 1,
**dadurch gekennzeichnet,**
daß dem hochprioren Programmodul die höchste und dem niederprioren Programmodul die niedrigste Prioritätsstufe geordnet ist.

3. Verfahren zum zeitlichen Überwachen einer von einer Prozessoreinrichtung (SYPR) in zyklischer Wiederholung ausgeführten Programmabarbeitung mit im Programm angeordneten Reinitialisierungsanweisungen für wenigstens eine Zeitgliedeinrichtung (WDT), von der bei Ablauf ihres Zeitvolumens eine Fehlermeldung erzeugt wird,
**dadurch gekennzeichnet,**
daß bei einer Programmabarbeitung, bei der Programmodule (PM) von einem Multitasking-Betriebssystem (BS) in Abhängigkeit von programmodulindividuell zugeordneten ritätsstufen (PR) der Prozessoreinrichtung (SYPR) zur Abarbeitung zugewiesen werden und die Programmodule (PM) jeweils einer Programmodulgruppe zugeordnet sind, daß mit Zuweisung des höchstprioren Programmoduls einer Programmodulgruppe jeweils ein in einem programmodulgruppenindividuellen Zählerspeicher (ZWS) hinterlegter Zählerwert (ZW) in Abhängigkeit von einem in einem programmodulgruppenindividuellen Richtungswertspeicher (RWS) gespeicherten Richtungswert (RW) erhöht bzw. verringert wird und nur bei Nichterreichen eines programmodulgruppenindividuell vorgebbaren oberen bzw. unteren Zählerendwertes eine programmodulgruppenindividuelle Zeitgliedeinrichtung eine Reinitialisierungsanweisung ausgeführt wird,
daß mit Zuweisung des niedrigstprioren Programmoduls innerhalb der Programmodulgruppe jeweils der Zählerwert (ZW) ausgelesen und ermittelt wird, welchem der beiden Zählerendwerte dieser Zählerwert (ZW) näherliegt,
und
daß dabei der Richtungswert (RW) so eingestellt wird, daß bei einer nachfolgenden Zuweisung des höchstprioren Programmoduls der Programmodulgruppe eine Abstandsvergrößerung des Zählerwertes (ZW) zum als näherliegend ermittelten Zählerendwert bewirkt wird.

4. Verfahren nach einem der vorhergehenden Ansprüche,
**dadurch gekennzeichnet,**
daß durch die Fehlermeldung ein Neustart der Prozessoreinrichtung (SYPR) eingeleitet wird.

5. Verfahren nach einem der vorhergehenden Ansprüche
**dadurch gekennzeichnet,**
daß eine erste und eine zweite Zeitgliedeinrichtung (WDT1, WDT2) vorgesehen ist, wobei das Zeitvolumen der zweiten Zeitgliedeinrichtung (WDT2) größer ist als das der ersten Zeitgliedeinrichtung (WDT1), daß durch eine Fehlermeldung der ersten Zeitgliedeinrichtung (WDT1) eine Bearbeitung einer zur Fehlerbehebung dienende Interruptroutine eingeleitet wird und daß durch eine Fehlermeldung der zweiten Zeitgliedeinrichtung (WDT2) ein Neustart der Prozessoreinrichtung (SYPR) eingeleitet wird.

6. Verfahren nach Anspruch 3,
**dadurch gekennzeichnet,**
daß durch die Fehlermeldung ein nur die programmodulgruppen betreffender Neustart der Prozessoreinrichtung (SYPR) eingeleitet wird.

7. Verfahren nach einem der vorhergehenden Ansprüche zum zeitlichen Überwachen einer Programmabarbeitung durch eine Prozessoreinrichtung in einer programmgesteuerten Kommunikationsanlage mit einem Echtzeit-Multitasking-Betriebssystem.

## Claims

1. Method for time-monitoring program execution, carried out by a processor device (SYPR) in cyclic repetition, having reinitialization instructions arranged in the program for at least one timing device (WDT), by which an error message is generated when its time volume expires, characterized in that in program execution program modules (PM) are allocated for execution to the processor device (SYPR) by a multitasking operating system (BS) in dependence on program-module-specifically assigned priority stages (PR), in that when a high-priority program module (PM_{OS}) is allocated, a counter value (ZW) stored in a counter memory (ZWS) is in each case increased or decreased in dependence on a direction value (RW) stored in a direction-value memory (RWS) and a reinitialization instruction is executed only if a predeterminable upper or lower counter end value is not reached, in that when a low-priority program module (PM_{LD}) is allocated, the counter value (ZW) is in each case read out and it is determined to which of the two counter end values the counter value (ZW) is closest, and in that in this case the direction value (RW) is set such that, when a high-priority program module (PM_{OS}) is subsequently allocated, an increase in the distance of the counter value (ZW) from the counter end value determined as closest is effected.

2. Method according to Claim 1, characterized in that the high-priority program module is assigned the highest priority stage and the low-priority program module is assigned the lowest priority stage.

3. Method for time-monitoring program execution, carried out by a processor device (SYPR) in cyclic repetition, having reinitialization instructions arranged in the program for at least one timing device (WDT), by which an error message is generated when its time volume expires, characterized in that in program execution program modules (PM) are allocated for execution to the processor device (SYPR) by a multitasking operating system (BS) in dependence on program-module-specifically assigned priority stages (PR) and the program modules (PM) are in each case assigned to a program module group, in that when the highest-priority program module of a program module group is allocated, a counter value (ZW) stored in a counter memory (ZWS) specific to the program module group is in each case increased or decreased in dependence on a direction value (RW) stored in a direction-value memory (RWS) specific to the program module group and a reinitialization instruction is executed on a timing device specific to the program module group only if a program-module-group-specifically predeterminable upper or lower counter end value is not reached, in that when the lowest-priority program module within the program module group is allocated, the counter value (ZW) is in each case read out and it is determined to which of the two counter end values this counter value (ZW) is closest, and in that in this case the direction value (RW) is set such that, when the highest-priority program module of the program module group is subsequently allocated, an increase in the distance of the counter value (ZW) from the counter end value determined as closest is effected.

4. Method according to one of the preceding claims, characterized in that a restarting of the processor device (SYPR) is initiated by the error message.

5. Method according to one of the preceding claims, characterized in that there is provided a first and a second timing device (WDT1, WDT2), the time volume of the second timing device (WDT2) being greater than that of the first timing device (WDT1), in that processing of an interrupt routine serving for error rectification is initiated by an error message of the first timing device (WDT1) and in that a restarting of the processor device (SYPR) is initiated by an error message of the second timing device (WDT2).

6. Method according to Claim 3, characterized in that a restarting of the processor device (SYPR) concerning only the program module groups is initiated by the error message.

7. Method according to one of the preceding claims for time-monitoring program execution by a processor device in a program-controlled communications installation having a real-time multitasking operating system.

## Revendications

1. Procédé pour la surveillance temporelle d'une exécution d'un programme effectuée en répétition cyclique par un dispositif à processeur (SYPR), avec des instructions de réinitialisation placées dans le programme et destinées au moins à un dispositif temporisateur (WDT) qui produit un message d'erreur après écoulement de son intervalle de temps,
caractérisé par le fait que
lors d'une exécution de programme lors de laquelle des modules de programmes (PM) sont alloués au dispositif à processeur (SYPR), pour être exécutés, par un système d'exploitation multitâche (BS) en fonction de niveaux de priorité (PR) associés individuellement aux modules de programmes,
dans le cas de l'allocation d'un module de programme (PM_{OS}) à grande priorité, on augmente ou on diminue, en fonction d'une valeur de sens (RW) mémorisée dans une mémoire de valeur de sens (RWS), une valeur de compteur (ZW) mémorisée dans une mémoire de compteur (ZWS) et on exécute une instruction de réinitialisation seulement si une valeur finale de compteur supérieure ou inférieure pouvant être prescrite n'est pas atteinte,
dans le cas de l'allocation d'un module de programme (PM_{LD}) à petite priorité, on lit la valeur de compteur (ZW) et on détermine de laquelle des deux valeurs finales de compteur, la valeur de compteur (ZW) est la plus proche, et
ce faisant, on règle la valeur de sens (RW) de telle sorte que, dans le cas d'une allocation consécutive du module de programme (PM_{OS}) à grande priorité, on provoque une augmentation de la distance de la valeur de compteur (ZW) à la valeur finale de compteur déterminée comme étant la plus proche.

2. Procédé selon la revendication 1,
caractérisé par le fait que
l'on associe le niveau de priorité le plus grand au module de programme à grande priorité et on associe le niveau de priorité le plus petit au module de programme à petite priorité.

3. Procédé pour la surveillance temporelle d'une exécution d'un programme effectuée en répétition cyclique par un dispositif à processeur (SYPR), avec des instructions de réinitialisation placées dans le programme et destinées au moins à un dispositif temporisateur (WDT) qui produit un message d'erreur après écoulement de son intervalle de temps,
caractérisé par le fait que
lors d'une exécution de programme pendant laquelle des modules de programmes (PM) sont alloués au dispositif à processeur (SYPR), pour être exécutés, par un système d'exploitation multitâche (BS) en fonction de niveaux de priorité (PR) associés individuellement aux programmes et pendant laquelle les modules de programmes (PM) sont associés à chaque fois à un groupe de modules de programmes,
dans le cas de l'allocation du module de programme le plus prioritaire d'un groupe de modules de programmes, on augmente ou on diminue, en fonction d'une valeur de sens (RW) mémorisée dans une mémoire de valeur de sens (RWS) propre au groupe de modules de programmes, une valeur de compteur (ZW) mémorisée dans une mémoire de compteur (ZWS) propre au groupe de modules de programmes et on exécute pour un dispositif temporisateur propre au groupe de modules de programmes une instruction de réinitialisation seulement si une valeur finale de compteur supérieure ou inférieure pouvant être prescrite et propre au groupe de modules de programmes n'est pas atteinte,
dans le cas de l'allocation du module de programme le moins prioritaire d'un groupe de modules de programmes, on lit la valeur de compteur (ZW) et on détermine de laquelle des deux valeurs finales de compteur, cette valeur de compteur (ZW) est la plus proche
et,
ce faisant, on règle la valeur de sens (RW) de telle sorte que, dans le cas d'une allocation consécutive du module de programme le plus prioritaire du groupe de modules de programmes, on provoque une augmentation de la distance de la valeur de compteur (ZW) à la valeur finale de compteur déterminée comme étant la plus proche.

4. Procédé selon l'une des revendications précédentes,
caractérisé par le fait que
le message d'erreur déclenche un redémarrage du dispositif à processeur (SYPR).

5. Procédé selon l'une des revendications précédentes,
caractérisé par le fait que
l'on prévoit un premier et un second dispositif temporisateur (WDT1, WDT2), l'intervalle de temps du second dispositif temporisateur (WDT2) étant supérieur à celui du premier dispositif temporisateur (WDT1), qu'un message d'erreur du premier dispositif temporisateur (WDT1) déclenche un traitement d'une routine d'interruption servant à l'élimination de l'erreur et qu'un message d'erreur du second dispositif temporisateur (WDT2) déclenche un redémarrage du dispositif à processeur (SYPR).

6. Procédé selon la revendication 3,
caractérisé par le fait que
le message d'erreur déclenche un redémarrage, ne concernant que les groupes de modules de programmes, du dispositif à processeur (SYPR).

7. Procédé selon l'une des revendications précédentes pour la surveillance temporelle d'une exécution de programme par un dispositif à processeur dans une installation de communication, commandée par programme, avec un système d'exploitation multitâche à temps réel.
